# FASCICULE DE BREVET EUROPEEN

(11) **EP 2 870 025 B1**
(45) Date de publication et mention de la délivrance du brevet: **25.05.2016**
(21) Numéro de dépôt: 13734448.7
(22) Date de dépôt: 09.07.2013
(51) Int. Cl.: B60N 2/20, B60N 2/23, B60N 2/44, G01B 7/00, B60N 2/02

(54) **PROCEDE DE CALIBRAGE D'UN DISPOSITIF D'ACTIONNEMENT**
VERFAHREN ZUR KALIBRIERUNG EINER BETÄTIGUNGSVORRICHTUNG
METHOD FOR CALIBRATING AN ACTUATING DEVICE

(30) Priorité: 09.07.2012 FR 1256580
(43) Date de publication de la demande: 13.05.2015
(73) Titulaire: PGA ELECTRONIC, F-36130 Montierchaume (FR)
(72) Inventeur: PIAULET, Jean-François, 36130 Deols (FR); BIZIEN, Sébastien, 36120 Sassierges Saint Germain (FR); BERTHOULOUX, Alain, 36000 Chateauroux (FR)
(74) Mandataire: Brevalex
(86) Numéro de dépôt international: PCT/EP2013/064463
(87) Numéro de publication internationale: WO 2014/009356

(56) Documents cités:
- EP-A1- 1 103 412
- EP-A1- 1 298 508
- FR-A1- 2 736 879
- US-A1- 2008 255 788

## Description

### DOMAINE TECHNIQUE

La présente invention se rapporte au domaine des dispositifs d'actionnement d'éléments à actionner, notamment des éléments de siège. Elle concerne plus spécifiquement un procédé de calibrage d'un dispositif d'actionnement d'un ou plusieurs éléments à actionner, en particulier d'un ou plusieurs éléments de siège.

### ÉTAT DE LA TECHNIQUE ANTÉRIEURE

Afin de pouvoir modifier la position d'un utilisateur installé sur un siège en fonction de ses envies ou de circonstances imposées, il est connu de munir les sièges de dispositifs électriques d'actionnement permettant de faire varier les configurations du siège par déplacement d'éléments de siège mobiles. De tels sièges se retrouvent par exemple dans les véhicules de transport tels que les avions, les bateaux et les voitures de chemins de fer.

Les demandes de brevet US 2008/255788 A1, EP 1 103 412 A1 et EP 1 298 508 A1 illustrent, entre autres, l'état de la technique antérieure à ce sujet.

Un siège peut par exemple comporter des éléments de siège tels qu'un dossier inclinable articulé à une extrémité d'une assise et un repose-jambes articulé à l'autre extrémité de l'assise. La configuration de chaque élément de siège peut être modifiée par l'intermédiaire d'un dispositif d'actionnement apte à commander, de façon indépendante ou simultanée, le déplacement d'actionneurs placés au niveau des éléments de siège.

Par ailleurs, afin de connaître à chaque instant la position des actionneurs, et donc la position des éléments de siège, il est connu de prévoir en association avec les actionneurs des transducteurs tels que des potentiomètres permettant de recueillir des valeurs de mesure représentatives des positions absolues des actionneurs.

Avant l'utilisation du siège, il est nécessaire de calibrer chaque actionneur, notamment par le biais du potentiomètre équipant l'actionneur, de façon à ce que le dispositif d'actionnement soit apte à commander le déplacement de chaque actionneur dans sa plage de débattement permise (entre sa butée minimale et sa butée maximale, celles-ci résultant de limites mécaniques ou imposées), pour permettre un changement de configuration de chaque élément de siège.

Afin de procéder au calibrage des actionneurs du dispositif d'actionnement, il est connu de déplacer manuellement chaque élément de siège entre ses deux positions extrêmes et de relever les deux valeurs correspondantes par le potentiomètre pour effectuer le calibrage.

On connaît également des procédés de calibrage des actionneurs dans lesquels le calibrage des actionneurs est effectué avant montage des actionneurs dans leur environnement sur le siège, et ce montage des actionneurs sur le siège est effectué systématiquement en plaçant auparavant le siège dans une position prédéfinie.

Les solutions existantes de l'art antérieur ne sont pas entièrement satisfaisantes. D'une part, il peut être fastidieux et prendre trop de temps d'effectuer un calibrage manuel de chaque actionneur par déplacement vers ses positions extrêmes. D'autre part, il peut être contraignant et peu confortable d'avoir à effectuer le montage du dispositif d'actionnement dans son environnement sur le siège lorsque le siège est dans une seule et unique position prédéterminée.

### EXPOSÉ DE L'INVENTION

Il existe un besoin pour disposer d'un nouveau procédé de calibrage d'un dispositif d'actionnement, permettant un calibrage plus confortable et plus rapide des actionneurs. Il existe également un besoin pour permettre un tel calibrage indépendamment de la position de la structure, notamment un siège, recevant les actionneurs lors du montage des actionneurs.

L'invention vise à répondre à tout ou partie de ces besoins.

L'invention a ainsi pour objet un procédé de calibrage selon la revendication 1.

Grâce à l'invention, il peut être possible de calibrer de manière rapide et efficace le ou les actionneurs d'un dispositif d'actionnement, par simple placement de la structure dans une position prédéterminée de référence et déclenchement d'un calibrage automatique pour déterminer les butées minimale et maximale des actionneurs. Le montage des actionneurs sur la structure avant son utilisation cinématique peut être facilité car il peut être possible de s'affranchir de la position de la structure lors du montage. En effet, le dispositif d'actionnement peut être installé sur la structure, celle-ci étant dans une configuration quelconque, et la seule connaissance d'une position prédéterminée de référence de la structure peut permettre le calibrage du ou des actionneurs au moyen de l'unité de calcul.

Le procédé selon l'invention peut en outre comporter l'une ou plusieurs des caractéristiques suivantes prises isolément ou suivant toutes combinaisons techniques possibles.

Le ou les éléments à actionner peuvent de préférence être des éléments de siège. De même, la structure peut de préférence être un siège, notamment un siège d'un véhicule de transport, par exemple un siège d'avion, de bateau ou d'une voiture de chemins de fer.

La position prédéterminée de référence de la structure peut être choisie de différentes manières. Elle peut par exemple correspondre à une configuration d'utilisation classique (ou position finale) de la structure, notamment la position de décollage pour un siège d'avion. Elle peut également correspondre à une position de la structure dans laquelle au moins une partie des actionneurs du dispositif d'actionnement est en butée mécanique, c'est-à-dire que le ou les actionneurs sont positionnés sur leur butée mécanique minimale ou sur leur butée mécanique maximale.

La structure peut être placée dans une seule et unique position prédéterminée de référence. En particulier, le calibrage de l'ensemble des actionneurs du dispositif d'actionnement peut se faire uniquement à partir de cette seule et unique position prédéterminée de référence de la structure. Autrement dit, il peut ne pas être nécessaire de placer la structure dans une ou plusieurs autres positions de référence que ladite position prédéterminée de référence pour effectuer le calibrage du dispositif d'actionnement.

L'étape b1 peut être précédée d'une étape a1 consistant à monter le dispositif d'actionnement, et notamment le ou les actionneurs, sur la structure, alors que la structure est dans une position quelconque avant montage. De la sorte, l'invention peut permettre de s'affranchir d'un positionnement prédéfini de la structure lors du montage du dispositif d'actionnement sur celle-ci. Le montage du ou des actionneurs dans leur environnement peut ainsi être plus rapide et plus facile.

L'étape d'initialisation de recopie de position peut permettre de vérifier l'adéquation du positionnement de la structure vis-à-vis de la course mécanique du ou des actionneurs. De la sorte, toute dispersion des butées mécaniques de la structure peut être corrigée par un calage manuel pour s'affranchir de disparités mécaniques à corriger.

De préférence, le transducteur est un potentiomètre.

L'étape d'initialisation de recopie de position peut correspondre à une étape d'initialisation du fonctionnement de chaque transducteur.

Un opérateur peut déplacer manuellement chaque actionneur, celui-ci se trouvant notamment déjà en place sur la structure, sur toute sa plage de débattement mécanique et agir sur chaque transducteur par friction pour s'assurer que chaque actionneur puisse être déplacé alternativement jusqu'à ses butées mécaniques minimale et maximale tout en permettant au transducteur de fournir une valeur de mesure correspondante. Autrement dit, l'étape a2 peut permettre, le cas échéant, de déplacer la butée minimale et/ou la butée maximale du transducteur pour la « réaligner » avec la butée minimale et/ou la butée maximale correspondante de l'actionneur.

La recopie de position à friction peut permettre de se prémunir d'un endommagement du transducteur, susceptible de survenir lorsque l'actionneur est déplacé mécaniquement au-delà d'une butée minimale ou maximale du transducteur. L'actionneur étant monté sur la structure indépendamment du positionnement des éléments à actionner, ce risque peut apparaître sur un endroit quelconque de la course de l'actionneur.

De préférence, l'étape a2 d'initialisation de recopie de position est effectuée après l'étape a1 et avant l'étape b1.

L'étape a2 peut être optionnelle, notamment lorsque le fonctionnement de chaque transducteur est déjà adapté à la plage de débattement de l'actionneur auquel il est associé, c'est-à-dire lorsque chaque transducteur est déjà apte à fournir une valeur de mesure représentative de la position absolue de l'actionneur sur toute sa plage de débattement, et ce en particulier avant montage de l'actionneur sur la structure.

L'unité de calcul peut être apte à déterminer les butées minimale et maximale de chaque actionneur au moyen d'un algorithme de calcul appliquant des incréments positifs et/ou négatifs à partir de la position d'origine de l'actionneur définie par la position prédéterminée de référence de la structure.

Plus particulièrement, pour un actionneur donné, l'unité de calcul peut être apte à définir sa position d'origine O, correspondant à la position de l'actionneur lorsque la structure est dans la position prédéterminée de référence, et à appliquer à cette position d'origine O des incréments positifs I⁺ et/ou des incréments négatifs I⁻ permettant d'obtenir des positions correspondantes O+I⁺ et/ou O-I⁻ de l'actionneur jusqu'à ce que deux de ces positions correspondantes permettent respectivement d'obtenir les butées minimale et maximale de l'actionneur. De la sorte, l'actionneur peut alors être considéré comme calibré.

La connaissance théorique de la plage de débattement de chaque actionneur peut être utilisée pour l'application des incréments positifs et/ou négatifs.

L'étape b2 peut être suivie d'une étape c1 optionnelle consistant à vérifier le bon fonctionnement du ou des actionneurs en place sur la structure après calibrage automatique au cours de l'étape b2.

L'étape b2 peut notamment permettre de vérifier que les différentes configurations d'utilisation de la structure sont correctement obtenues lorsque les actionneurs sont déplacés. La course de déplacement d'un actionneur pour obtenir une configuration d'utilisation spécifique de l'élément à actionner auquel il est associé peut être déterminée par exemple à partir d'une base de données prévue à cet effet.

L'étape b2 peut en outre être suivie si nécessaire, de préférence après l'étape c1, d'une étape c2 de calibrage manuel consistant à placer un actionneur à recalibrer dans une position sensiblement médiane de sa plage de débattement et à activer l'unité de calcul pour le calibrage manuel de l'actionneur, l'unité de calcul étant apte à mémoriser la ou les butées de l'actionneur après déplacement de l'actionneur au niveau de cette ou de ces butées.

L'étape c2 peut permettre un ajustement manuel du calibrage d'un actionneur en cas de calibrage automatique non optimal au cours de l'étape b2, pour compenser des disparités mécaniques et/ou lors du remplacement d'un actionneur défaillant sur la structure pour ne pas à avoir à recalibrer l'ensemble des actionneurs.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures du dessin annexé, schématiques et partielles, sur lequel :
- la figure 1 représente un exemple de structure sous la forme d'un siège équipé d'un dispositif d'actionnement,
- la figure 2 représente un diagramme illustrant un exemple de réalisation d'étapes du procédé selon l'invention, et
- les figures 3a à 3c illustrent le principe de l'étape a2 d'initialisation de recopie de position.

### EXPOSÉ DÉTAILLÉ D'UN MODE DE RÉALISATION PARTICULIER

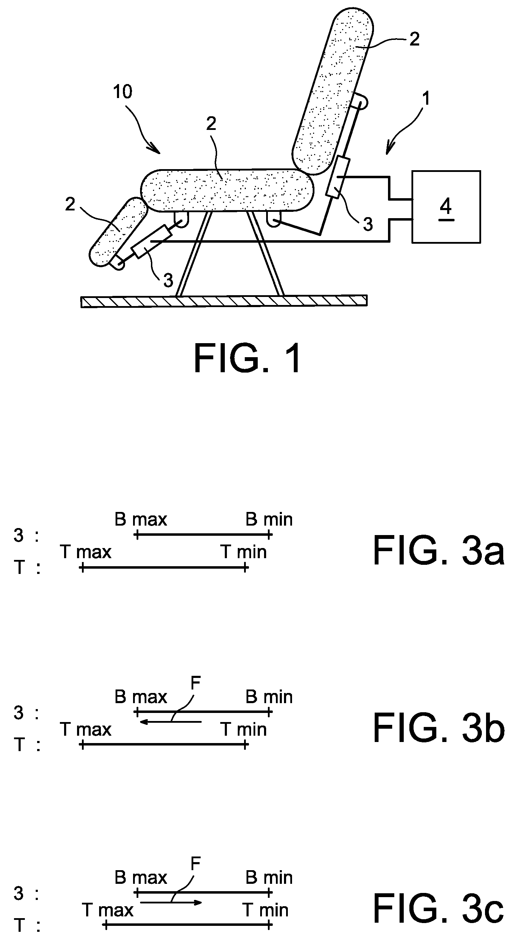

On a illustré à l'aide des figures 1, 2 et 3a à 3c un exemple de mise en oeuvre du procédé selon l'invention.

En référence à la figure 1, on a représenté un exemple de structure 10 sous la forme d'un siège, par exemple un siège d'avion, comportant trois éléments à actionner 2 sous forme d'éléments de siège.

Les éléments de siège 2 correspondent par exemple à un dossier inclinable, une assise et un repose-jambes.

Les éléments de siège 2 du siège 10 peuvent être déplacés pour modifier la configuration d'utilisation du siège 10 au moyen d'un dispositif d'actionnement 1 comportant des actionneurs 3.

Le calibrage automatique des actionneurs 3 peut être réalisé à l'aide d'une unité de calcul 4 à laquelle sont reliés les actionneurs 3.

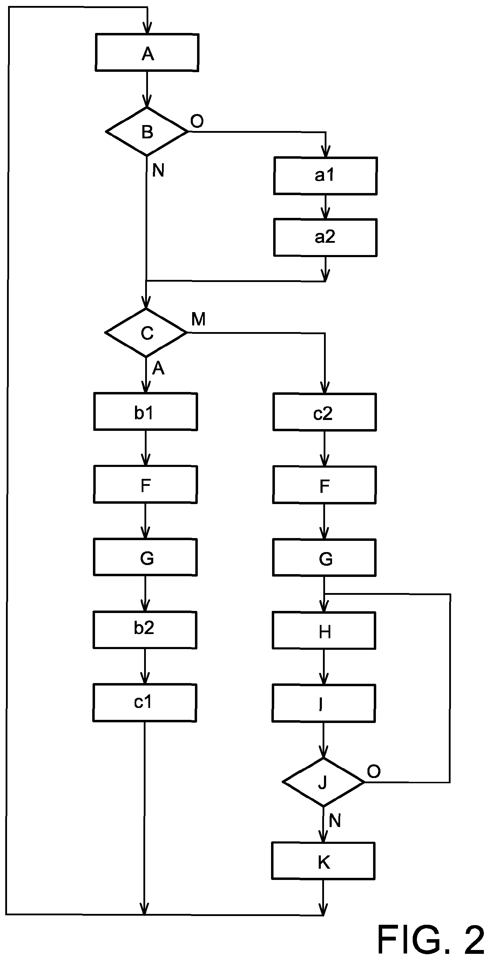

La figure 2 représente un diagramme illustrant les étapes du procédé selon l'invention, par exemple mis en oeuvre sur le siège 10 de la figure 1.

Conformément à l'invention, le procédé comporte au moins les étapes b1 et b2 représentées sur la figure 2, consistant respectivement à placer le siège 10, notamment les éléments de siège 2, dans une position prédéterminée de référence, notamment la position de décollage du siège 10, et à activer l'unité de calcul 4 pour le calibrage automatique des actionneurs 3 du dispositif d'actionnement 1.

L'unité de calcul 4 est apte à déterminer, pour les actionneurs 3, les butées minimale et maximale définissant leur plage de débattement autorisée à partir de la position prédéterminée de référence du siège 10, prise comme position d'origine.

Plus précisément, pour un actionneur 3 donné, l'unité de calcul 4 est apte à définir sa position d'origine O, correspondant à la position de l'actionneur 3 lorsque le siège 10 est dans la position prédéterminée de référence, et à appliquer à cette position d'origine O des incréments positifs I⁺ et/ou des incréments négatifs I⁻ permettant d'obtenir des positions correspondantes O+1⁺ et/ou O-I⁻ de l'actionneur 3 jusqu'à ce que deux de ces positions correspondantes permettent respectivement d'obtenir les butées minimale et maximale de l'actionneur 3.

La butée minimale de l'actionneur 3 est donc donnée par une position correspondante O+I⁻ₘᵢₙ et la butée maximale de l'actionneur 3 est donnée par une position correspondante O+I⁺ₘₐₓ·

Le procédé peut par exemple être mis en oeuvre de la façon suivante.

L'unité de calcul 4 est tout d'abord mise hors tension dans une étape A avant de procéder au calibrage du dispositif d'actionnement 1.

Au cours de l'étape B, l'opérateur doit déterminer si le procédé de calibrage concerne le calibrages initial d'un dispositif d'actionnement 1 destiné à être monté pour la première fois sur un siège 10 ou le calibrage d'un nouvel actionneur 3 destiné à être monté sur le siège 10 en remplacement d'un actionneur 3 défaillant. Dans ces deux cas (cas O), le procédé comporte successivement les étapes a1 et a2. Dans le cas contraire (cas N), c'est-à-dire pas de calibrage initial du dispositif d'actionnement 1 ni de remplacement d'un actionneur 3, le procédé comporte immédiatement l'étape C à la suite de l'étape B.

L'étape a1 permet le montage du dispositif d'actionnement 1 sur le siège 10, le siège 10 étant dans une position quelconque avant ce montage, et ce avant même de réaliser le calibrage d'un quelconque actionneur 3.

Une fois l'installation du dispositif d'actionnement 1 réalisée sur le siège 10, l'étape a2 permet à un opérateur de déplacer manuellement au moins un actionneur 3, en particulier tous les actionneurs 3 pour un calibrage initial ou un actionneur 3 de remplacement, sur toute sa plage de débattement, le déplacement s'accompagnant d'un mouvement de friction au niveau d'un transducteur associé à l'actionneur 3, et ce pour permettre une recopie de position à friction correcte par rapport au mouvement complet de l'actionneur 3 dans sa plage de débattement.

Pour ce faire, l'opérateur peut par exemple utiliser la commande de débrayage manuel de l'actionneur 3 afin de tester si celui-ci est apte à bouger correctement sur la totalité de sa course, à savoir jusqu'à chacune de ses butées mécaniques.

Les figures 3a à 3c illustrent plus précisément le principe de l'étape a2 de recopie de position sur un exemple particulier.

Initialement, après montage de l'actionneur 3 sur le siège 10, il est possible par exemple, comme illustré sur la figure 3a, que la course de l'actionneur 3, c'est-à-dire sa plage de débattement définie par les butées minimale Bₘᵢₙ et maximale Bₘₐₓ, ne corresponde pas à la plage de mesure du transducteur T définie par les butées minimale Tₘᵢₙ et maximale Tₘₐₓ du transducteur T. Plus particulièrement sur cet exemple, le transducteur T ne pourra pas permettre la mesure de la butée minimale Bₘᵢₙ de l'actionneur 3, le transducteur T risque d'être endommagé, alors que le problème ne se pose pas pour la lecture de la butée maximale Bₘₐₓ de l'actionneur 3.

Sur la figure 3b, on a illustré le fait que le déplacement de l'actionneur 3 (selon la flèche F) vers sa butée maximale Bₘₐₓ ne pose pas de problème par rapport au transducteur T pour permettre la mesure de cette butée maximale Bₘₐₓ car la butée maximale Tₘₐₓ du transducteur T est située au-delà la butée maximale Bₘₐₓ de l'actionneur 3.

En revanche, lorsque l'actionneur 3 se déplace vers sa butée minimale Bₘᵢₙ (selon la flèche F sur la figure 3c), le transducteur T n'est pas apte à permettre sa mesure du fait d'une butée minimale Tₘᵢₙ plus faible. Aussi, comme illustré sur la figure 3c, la butée minimale Tₘᵢₙ du transducteur T est déplacée pour être en concordance avec la butée minimale Bₘᵢₙ de l'actionneur 3 par un mouvement de friction.

A l'issue de l'étape a2, le procédé selon l'invention comporte alors l'étape C au cours de laquelle l'opérateur doit déterminer s'il va s'agir d'un calibrage manuel M ou d'un calibrage automatique A du dispositif d'actionnement 1, le calibrage automatique A étant systématiquement mis en oeuvre au cours du procédé selon l'invention en premier lieu. Il peut être ou non suivi d'un calibrage manuel M.

La première étape b1 du calibrage automatique A consiste à placer le siège 10 dans la position prédéterminée de référence.

Cette position prédéterminée de référence est définie au préalable et peut par exemple correspondre à une configuration d'utilisation précise du siège 10 pour un utilisateur ou à une configuration dans laquelle des actionneurs 3 sont positionnés sur une de leurs butées mécaniques.

Au cours de l'étape b1, il est possible de mettre l'unité de calcul 4 sous tension afin d'éventuellement positionner le siège 10 dans la position prédéterminée de référence à l'aide de moyens électroniques reliés à l'unité de commande 4. Toutefois, l'unité de calcul 4 est à nouveau mise hors tension avant de débuter l'étape F.

Les étapes F et G permettent respectivement de mettre l'unité de calcul 4 sous tension et d'agir sur l'unité de calcul 4 pour la placer en mode de calibrage.

Au cours de l'étape b2, l'activation du mode de calibrage automatique de l'unité de calcul 4 permet alors, au moyen de l'algorithme de calcul, de déterminer les butées minimale et maximale des actionneurs 3 par application d'incréments positifs et/ou négatifs à partir de la position prédéterminée de référence connue. L'unité de calcul 4 est apte à mémoriser l'ensemble des butées calculées des actionneurs 3.

Enfin, au cours de l'étape c1, l'opérateur vérifie le bon fonctionnement des actionneurs 3 en place sur le siège 10 afin de déterminer si un procédé de calibrage manuel M est nécessaire pour corriger une ou des butées d'un ou de plusieurs actionneurs qui seraient éventuellement décalées.

Pour le cas où la vérification du fonctionnement des actionneurs 3 au cours de l'étape c1 donne un résultat satisfaisant, le procédé se termine avec l'étape c1.

Dans le cas contraire où un calibrage manuel M d'au moins un actionneur 3 est nécessaire, le procédé revient à l'étape A au cours de laquelle l'unité de calcul 4 est à nouveau mise hors tension, puis les étapes B et C conduisent directement à l'étape c2.

Au cours de l'étape c2, au moins un actionneur 3 devant être recalibré est placé approximativement à la moitié de sa course.

Pour ce faire, l'opérateur peut par exemple utiliser la commande de débrayage manuel de l'actionneur 3 pour déplacer l'actionneur 3 sur la totalité de sa plage de débattement et l'actionneur 3 est ensuite placé dans une position médiane de sa plage de débattement.

Les étapes F et G permettent respectivement de mettre l'unité de calcul 4 sous tension et d'agir sur l'unité de calcul 4 pour la placer en mode de calibrage.

Au cours de l'étape H, l'opérateur déplace l'actionneur 3 jusqu'à une nouvelle butée souhaitée. Le déplacement de l'actionneur 3 peut être effectué mécaniquement par débrayage ou électriquement au moyen de l'unité de calcul 4.

L'étape I permet à l'opérateur de valider sur l'unité de calcul 4 le placement de l'actionneur 3 au niveau de cette nouvelle butée. Afin de permettre un contrôle visuel de la bonne prise en compte de la nouvelle butée, l'actionneur 3 se déplace dans le sens opposé de la butée nouvellement calibrée en faisant un mouvement bref pour revenir se placer sur cette butée nouvellement calibrée.

L'étape J permet à l'opérateur de déterminer si une autre butée de l'actionneur doit être calibrée. Si tel est le cas, l'étape J conduit à nouveau à l'étape H. Dans le cas contraire, l'étape J conduit à l'étape K qui consiste pour l'opérateur à sortir du mode de calibrage de l'unité de calcul 4.

A la fin de ces étapes, le dispositif d'actionnement 1 est entièrement calibré à partir de la connaissance d'une seule position prédéterminée de référence et sans avoir eu à positionner le siège 10 dans une configuration prédéfinie.

L'invention peut donc permettre l'incorporation du dispositif d'actionnement 1 sur le siège 10, peu importe la position du siège 10, et le calibrage automatique des actionneurs 3 déjà en place sur le siège 10.

Bien entendu, l'invention n'est pas limitée à l'exemple de réalisation qui vient d'être décrit.

L'expression « comportant un » doit être comprise comme étant synonyme de « comportant au moins un », sauf si le contraire est spécifié.

## Revendications

1. Procédé de calibrage d'un dispositif d'actionnement (1) d'un ou plusieurs éléments à actionner (2) d'une structure (10), le dispositif d'actionnement (1) comportant un ou plusieurs actionneurs (3), **caractérisé en ce qu'**il comporte les étapes successives suivantes :
(a2) étape d'initialisation de recopie de position consistant à déplacer mécaniquement un ou plusieurs actionneurs (3) sur toute la ou les plage(s) de débattement nécessaires pour atteindre chaque butée mécanique minimale et chaque butée mécanique maximale de la structure (10), chaque actionneur (3) étant associé à un transducteur adapté pour fournir une valeur de mesure représentative de la position absolue de l'actionneur (3), le déplacement de chaque actionneur (3) s'accompagnant d'un mouvement de friction au niveau du transducteur lorsqu'une butée mécanique de l'actionneur (3) est atteinte pour permettre au transducteur de fournir une valeur de mesure sur toute la plage de débattement de l'actionneur (3),
(b1) placer la structure (10), notamment le ou les éléments à actionner (2) de la structure (10), dans une position prédéterminée de référence,
(b2) activer une unité de calcul (4) pour le calibrage automatique du ou des actionneurs (3) du dispositif d'actionnement (1), l'unité de calcul (4) étant apte à déterminer, pour le ou les actionneurs (3), les butées minimale et maximale définissant sa ou leur plage de débattement autorisée à partir de la position prédéterminée de référence de la structure (10), prise comme position d'origine.

2. Procédé selon la revendication 1, **caractérisé en ce que** l'étape (b1) est précédée d'une étape (a1), l'étape (a2) d'initialisation de recopie de position étant de préférence effectuée après l'étape (a1), consistant à :
(a1) monter le dispositif d'actionnement (1) sur la structure (10), alors que la structure (10) est dans une position quelconque avant montage.

3. Procédé selon l'une des revendications précédentes, **caractérisé en ce que** le transducteur est un potentiomètre.

4. Procédé selon l'une quelconque des revendications précédentes, **caractérisé en ce que** l'unité de calcul (4) est apte à déterminer les butées minimale et maximale de chaque actionneur (3) au moyen d'un algorithme de calcul appliquant des incréments positifs (I⁺) et/ou négatifs (I⁻) à partir de la position d'origine (O) de l'actionneur (3) définie par la position prédéterminée de référence de la structure (10).

5. Procédé selon l'une quelconque des revendications précédentes, **caractérisé en ce que** l'étape (b2) est suivie d'une étape (c1) consistant à :
(c1) vérifier le bon fonctionnement du ou des actionneurs (3) en place sur la structure (10) après calibrage automatique au cours de l'étape (b2).

6. Procédé selon l'une quelconque des revendications précédentes, **caractérisé en ce que** l'étape (b2) est suivie d'une étape (c2) de calibrage manuel consistant à :
(c2) placer un actionneur (3) à recalibrer dans une position sensiblement médiane de sa plage de débattement et activer l'unité de calcul (4) pour le calibrage manuel de l'actionneur (3), l'unité de calcul (4) étant apte à mémoriser la ou les butées de l'actionneur (3) après déplacement de l'actionneur (3) au niveau de cette ou de ces butées.

7. Procédé selon l'une quelconque des revendications précédentes, **caractérisé en ce que** la position prédéterminée de référence de la structure (10) correspond à une configuration d'utilisation de la structure (10).

8. Procédé selon l'une quelconque des revendications précédentes, **caractérisé en ce que** la structure (10) est un siège, notamment un siège d'avion, et **en ce que** le ou les éléments à actionner (2) sont des éléments de siège.

9. Procédé selon l'une quelconque des revendications précédentes, **caractérisé en ce que** la structure (10) est placée dans une seule et unique position prédéterminée de référence.

## Patentansprüche

1. Verfahren zur Kalibrierung einer Betätigungsvorrichtung (1) eines oder mehrerer zu betätigender Elemente (2) einer Struktur (10), wobei die Betätigungsvorrichtung (1) einen oder mehrere Betätiger (3) umfasst, **dadurch gekennzeichnet, dass** es die folgenden aufeinanderfolgende Schritte umfasst:
(a2) einen Schritt der Initialisierung des Positionsrückkopierens, umfassend eine mechanische Verlagerung eines oder mehrerer Betätiger (3) über den/die gesamten Wegbereich(e), die erforderlich sind, um jeden minimalen mechanischen Anschlag und jeden maximalen mechanischen Anschlag der Struktur (10) zu erreichen, wobei jeder Betätiger (3) einem Wandler zugeordnet ist, der dazu ausgelegt ist, einen Messwert zu liefern, welcher repräsentativ ist für die Absolutposition des Betätigers (3), wobei die Verlagerung jedes Betätigers (3) von einer Reibbewegung im Bereich des Wandlers begleitet wird, wenn ein mechanischer Anschlag des Betätigers (3) erreicht wird, um es dem Wandler zu ermöglichen, einen Messwert über den gesamten Wegbereich des Betätigers (3) zu liefern,
(b1) Platzieren der Struktur (10), insbesondere des oder der zu betätigenden Elements/Elemente (2) der Struktur (10), in einer vorbestimmten Referenzposition,
(b2) Aktivieren einer Recheneinheit (4) für die automatische Kalibrierung des oder der Betätiger(s) (3) der Betätigungsvorrichtung (1), wobei die Recheneinheit (4) dazu ausgelegt ist, für den oder die Betätiger (3) den minimalen und den maximalen Anschlag zu bestimmen, die seinen oder ihren zulässigen Wegbereich definieren, ausgehend von der vorbestimmten Referenzposition der Struktur (10), die als Ausgangsposition genommen wird.

2. Verfahren nach Anspruch 1, **dadurch gekennzeichnet, dass** dem Schritt (b1) ein Schritt (a1) vorhergeht, wobei der Schritt (a2) zur Initialisierung des Positionsrückkopierens vorzugsweise nach dem Schritt (a1) ausgeführt wird, umfassend:
(a1) Montieren der Betätigungsvorrichtung (1) an der Struktur (10) während die Struktur (10) in einer beliebigen Position vor der Montage ist.

3. Verfahren nach einem der vorhergehenden Ansprüche, **dadurch gekennzeichnet, dass** der Wandler ein Potentiometer ist.

4. Verfahren nach einem der vorhergehenden Ansprüche, **dadurch gekennzeichnet, dass** die Recheneinheit (4) dazu ausgelegt ist, den minimalen und den maximalen Anschlag jedes Betätigers (3) mit Hilfe eines Rechenalgorithmus zu bestimmen, der positive (I⁺) und/oder negative (I⁻) Inkremente ausgehend von der Ausgangsposition (O) des Betätigers (3) verwendet, definiert durch die vorbestimmte Referenzposition der Struktur (10).

5. Verfahren nach einem der vorhergehenden Ansprüche, **dadurch gekennzeichnet, dass** auf den Schritt (b2) ein Schritt (c1) folgt, umfassend:
(c1) Überprüfen des ordnungsgemäßen Funktionierens des oder der Betätiger(s) (3), platziert an der Struktur (10), nach automatischer Kalibrierung im Verlauf des Schritts (b2).

6. Verfahren nach einem der vorhergehenden Ansprüche, **dadurch gekennzeichnet, dass** auf den Schritt (b2) ein Schritt (c2) der manuellen Kalibrierung folgt, umfassend:
(c2) Platzieren eines neu zu kalibrierenden Betätigers (3) in einer im Wesentlichen Mittelposition seines Wegbereichs und Aktivieren der Recheneinheit (4) für die manuelle Kalibrierung des Betätigers (3), wobei die Recheneinheit (4) dazu ausgelegt ist, den Anschlag oder die Anschläge des Betätigers (3) nach einer Verlagerung des Betätigers (3) im Bereich dieses oder dieser Anschläge zu speichern.

7. Verfahren nach einem der vorhergehenden Ansprüche, **dadurch gekennzeichnet, dass** die vorbestimmte Referenzposition der Struktur (10) einer Verwendungskonfiguration der Struktur (10) entspricht.

8. Verfahren nach einem der vorhergehenden Ansprüche, **dadurch gekennzeichnet, dass** die Struktur (10) ein Sitz ist, insbesondere ein Flugzeugsitz, und dass das oder die zu betätigende Element(e) (2) Sitzelemente sind.

9. Verfahren nach einem der vorhergehenden Ansprüche, **dadurch gekennzeichnet, dass** die Struktur (10) in einer einzigen und eindeutigen vorbestimmten Referenzposition platziert wird.

## Claims

1. Method for calibrating an actuating device (1) of one or several elements to be actuated (2) of a structure (10), with the actuating device (1) comprising one or several actuators (3), **characterised in that** it comprises the following successive steps:
(a2) step of initialising the copying of the position consisting in mechanically displacing one or several actuators (3) over the entire range or ranges of movement required to reach each minimum mechanical end stop and each maximum mechanical end stop of the structure (10), with each actuator (3) being associated with a transducer suited to provide a measurement value that represents the absolute position of the actuator (3), with the displacement of each actuator (3) accompanied by a movement of friction on the transducer when a mechanical end stop of the actuator (3) is reached in order to allow the transducer to provide a measurement value over the entire range of movement of the actuator (3),
(b1) placing the structure (10), in particular the element or elements to be actuated (2) of the structure (10), in a predetermined reference position,
(b2) activating a calculation unit (4) to automatically calibrate the actuator or actuators (3) of the actuating device (1), with the calculation unit (4) able to determine, for the actuator or actuators (3), the minimum and maximum end stops that define its or their authorised range of movement using the predetermined reference position of the structure (10), taken as the origin position.

2. Method according to claim 1, **characterised in that** the step (b1) is preceded by a step (a1), with the step (a2) of initialising the copying of the position being more preferably carried out after the step (a1), consisting in:
(a1) mounting the actuating device (1) onto the structure (10), while the structure (10) is in any position before mounting.

3. Method according to one of the preceding claims, **characterised in that** the transducer is a potentiometer.

4. Method as claimed in any preceding claim, **characterised in that** the calculation unit (4) is able to determine the minimum and maximum end stops of each actuator (3) by means of a calculation algorithm that applies positive (I⁺) and/or negative (I⁻) increments using the origin position (O) of the actuator (3) defined by the predetermined reference position of the structure (10).

5. Method as claimed in any preceding claim, **characterised in that** the step (b2) is followed by a step (c1) consisting in:
(c1) checking the proper operation of the actuator or actuators (3) in place on the structure (10) after automatic calibration during the step (b2).

6. Method as claimed in any preceding claim, **characterised in that** the step (b2) is followed by a step (c2) of manual calibrating consisting in:
(c2) placing an actuator (3) to be recalibrated in a substantially median position of its range of movement and activating the calculation unit (4) for the manual calibration of the actuator (3), with the calculation unit (4) able to memorise the end stop or stops of the actuator (3) after the displacement of the actuator (3) on this end stop or stops.

7. Method as claimed in any preceding claim, **characterised in that** the predetermined reference position of the structure (10) corresponds to a configuration for use of the structure (10).

8. Method as claimed in any preceding claim, **characterised in that** the structure (10) is a seat, in particular an aircraft seat, and **in that** the element or elements to be actuated (2) are seat elements.

9. Method as claimed in any preceding claim, **characterised in that** the structure (10) is placed in a single and unique predetermined reference position.
